# EUROPEAN PATENT SPECIFICATION

(11) **EP 0 883 633 B1**
(45) Date of publication and mention of the grant of the patent: **29.12.2004**
(21) Application number: 97907905.0
(22) Date of filing: 27.02.1997
(51) Int. Cl.: C08F 8/32, C08K 5/17, C08L 33/02, A63B 37/12, C08F 8/44, C08L 23/08

(54) **IONOMER COMPOSITION AND ITS USE**
IONOMERZUSAMMENSETZUNG UND IHRE VERWENDUNG
COMPOSITION IONOMERE ET SON UTILISATION

(30) Priority: 27.02.1996 JP 4017896
(43) Date of publication of application: 16.12.1998
(73) Proprietor: E.I. DU PONT DE NEMOURS AND COMPANY, Wilmington, Delaware 19898 (US)
(72) Inventor: YAMAMOTO, Yoshimasa, Sodegaura-shi, Chiba 299-0245 (JP); HOSOAI, Yasuhisa, Ichihara-shi, Chiba 299-01 (JP); HARA, Hisaaki, Chiba-shi, Chiba 260-0021 (JP)
(74) Representative: Abitz, Walter, Dr.-Ing.
(86) International application number: PCT/US1997/003060
(87) International publication number: WO 1997/031956

(56) References cited:
- EP-A- 0 260 646
- WO-A-86/01214
- WO-A-95/24448
- GB-A- 2 277 932
- JP-A- 1 207 343
- JP-A- 61 009 403
- JP-A- 61 281 145
- US-A- 3 912 699
- US-A- 4 323 247
- US-A- 4 906 703
- US-A- 5 068 151
- US-A- 5 324 783
- DATABASE WPI Section Ch, Week 8737 Derwent Publications Ltd., London, GB; Class A14, AN 1987-259351 XP002178640 & JP 62 022841 A (MITSUBISHI CORP.), 31 January 1987 (1987-01-31)

## Description

This patent application claims priority to Japanese Patent Application No. 8-40178, which is incorporated herein by reference.

### FIELD OF THE INVENTION

The present invention relates to an ionomer composition having improved rebound resilience and moldability and its use. These ionomers are free from such troubles as fuming and discoloration by melt-molding. In particular, the present invention is concerned with an injection-moldable ionomer composition that is useful in a number of applications, particularly as a material for golf ball covers.

### BACKGROUND OF THE INVENTION

Because of their good durability, a variety of ionomers have heretofore been proposed and used as cover materials for golf balls. Hard ionomers usually exhibit excellent rebound resilience and therefore have been used in golf ball covers to accomplish increased flight distance.

Use of ionomers having a high hardness as a cover material, however, produces unsatisfactory feel at the time of hitting the ball and limitations on being able to control the ball (balls covered with hard ionomer covers have reduced spin). It is therefore desired to obtain a "hard" ionomer the has rebound resilience that is larger than would be expected based on its hardness.

To obtain more control when hitting golf balls, soft ionomers have recently been blended with hard ionomers. Generally, however, the soft ionomers have low rebound resilience and flight distance of the ball is lost. Therefore, it has been desired to obtain a "soft" ionomer that exhibits a high rebound resilience.

It is known that addition of a certain kind of diamine is effective in improving the hardness, stiffness and rebound resilience of ionomers. Ionomers blended with an aromatic or alicyclic compound having a bisaminoalkyl group are disclosed in Japanese Laid-Open Patent Publications Nos. 9403/1986 and 281145/1986 as having improved stiffness and hardness and as producing less fuming and discoloration at the time of melt-molding. Though the object is different, Japanese Laid-Open Patent Publication No. 501455/1986 proposes an ionomer that is modified by adding an amine.

Application of these technologies to the hard ionomer helps to improve stiffness and hardness, as well as rebound resilience. Similar tendency is recognized even when these technologies are applied to a soft ionomer that contains an unsaturated carboxylic acid ester as a copolymerizable component. From the above-mentioned circumstances, however, it has been desired to improve the rebound resilience while suppressing the stiffness and hardness as much as possible. Besides, when the diamine that has been proposed in the above-mentioned publications is used, the above-mentioned defects are not completely eliminated though troubles such as fuming and the like can be decreased during the melt-molding. Therefore, it has been desired to accomplish further improvement.

### SUMMARY OF THE INVENTION

The present invention is concerned with an ionomer composition comprising (A) an ionomer of an ethylene/unsaturated carboxylic acid copolymer, and (B) a condensed cyclic compound having not less than two aminoalkyl groups at a ratio of from 0.01 to 1 equivalent with respect to the carboxyl groups of the ionomer (A).

The present invention provides rebound resilience to a degree equal to, or better than, the rebound resilience accomplished so far while suppressing the hardness and rigidity to the levels lower than those disclosed in the above-mentioned publications. Further, the moldability is improved, and troubles during the melt-molding are decreased when an amine that will be described later is blended. Further, lower toughness at lower temperature making the material less elastic at lower temperatures is obtained.

The present invention provides a hard ionomer composition having high hardness and stiffness as well as excellent rebound resilience. It also provides a soft ionomer composition having low hardness and stiffness and high rebound resilience.

When used in a cover material for golf balls, the improved ionomer composition provides a golf ball having a high rebound resilience while at the same time having the softness desired for feel and control. Accordingly, the present invention is concerned with a cover material for golf balls using the above-mentioned ionomer composition and a golf ball.

The ionomer of the present invention have utility in floor coverings since abraded surfaces appear less "smeared" or "dull" and in other molded applications such as caps for perfume bottle caps.

According to the present invention, there is obtained an ionomer composition having suitably improved stiffness and hardness and having improved rebound resilience. The ionomer composition exhibits a melt flow rate which is higher than that of the starting ionomer and, hence, exhibits excellent melt moldability. The ionomer composition further gives such advantages as reduced fuming and odor during the melt-molding.

When, for example, a hard ionomer is used as the ionomer (A), there is obtained a composition having high stiffness, high hardness and high rebound resilience. Such a composition is useful as a cover material for golf balls that fly straight and over increased distances.

A golf ball with a dual cover in which the cover is made up of two layers has in recent years been put into practical use. In this case, a hard ionomer is used as the outer cover contributing to increasing the flight distance and durability, and a soft thermoplastic elastomer is used as the inner cover contributing to improving spin performance of the ball, i.e., contributing to improving control performance and feel at the time of hitting the ball. Japanese Laid-Open Patent Publication No. 34318/1994 discloses a golf ball with a dual cover by using a hard ionomer containing a relatively large amount of unsaturated carboxylic acid as the inner cover and a relatively soft thermoplastic resin as the outer cover. That is, the golf ball with the dual cover has two layers in such combinations as the outer cover of a high hardness with the inner cover of a low hardness, and the outer cover of a low hardness with the inner cover of a high hardness. The above-mentioned composition of the present invention can be used for forming the layer having a high hardness. In this case, the layer of a low hardness may be an ionomer or an ionomer composition that has heretofore been known, such as one or two or more kinds of the ionomers described above as the ionomer (A).

When a soft ionomer is used as the ionomer (A), there is obtained a composition having a relatively low stiffness, a low hardness and a high rebound resilience. Such a composition is useful as a cover material for golf balls, and makes it possible to provide golfballs that can be well controlled since they can be spun well and give good feel at the time of hitting. The soft composition having high rebound resilience makes it possible to constitute a layer of a low hardness in the dual cover. In this case, the layer having a high hardness may be the above-mentioned composition having high stiffness, high hardness and high rebound resilience or may be a widely known ionomer or an ionomer composition.

When a blend of hard ionomer and soft ionomer is used as the ionomer, it is allowed to obtain a composition having well-adjusted hardness and stiffness, as well as a high rebound resilience depending upon the blending ratio. Such a composition is excellent in ball control performance and durability, and can be used as an excellent cover material for golf balls. The hard ionomer and the soft ionomer can be blended at a ratio of, for example, from 10/90 to 90/10 and, particularly, from 30/70 to 70/30.

By utilizing its properties, the composition of the present invention can be used, in addition to the cover material for golf balls, as a variety of molded articles such as core of golf balls, one-piece balls, counter materials for shoes, automotive parts, construction materials, office supplies, films, sheets, containers and tubes through extrusion molding, injection molding, blow molding, compression molding and heat molding.

### DETAILED DESCRIPTION OF THE INVENTION

According to the present invention, a condensed cyclic compound (B) having not less than two aminoalkyl groups is selected out of a variety of amines, and is combined with an ionomer (A) to obtain a modified ionomer composition. This modified ionomer composition gives the advantage of improved rebound resilience without impairing excellent properties of the ionomer.

The ionomer (A) used in the present invention is that of an ethylene/unsaturated carboxylic acid copolymer. Here, the ethylene/unsaturated carboxylic acid copolymer may not only be a copolymer of ethylene and an unsaturated carboxylic acid, but it may also be a copolymer into which another optional copolymerizable component is copolymerized.

Examples of the unsaturated carboxylic acid include acrylic acid, methacrylic acid, fumaric acid, maleic acid, itaconic acid, monomethyl maleate, monoethyl maleate, maleic anhydride and itaconic anhydride. Among them, it is particularly preferred to use acrylic acid or methacrylic acid.

Examples of the optional copolymerizable component include unsaturated carboxylic acid esters such as methyl acrylate, ethyl acrylate, isobutyl acrylate, n-butyl acrylate, isooctyl acrylate, methyl methacrylate, isobutyl methacrylate, dimethyl maleate and diethyl maleate; vinyl esters such as vinyl acetate and vinyl propionate; and carbon monoxide. To obtain a soft ionomer composition, in particular, it is desired to use such a copolymer in which the copolymerizable component is an unsaturated carboxylic acid ester and, particularly, an ester of acrylic acid or methacrylic acid.

The monomer content in the ethylene unsaturated carboxylic acid copolymer may differ depending upon the properties of the desired composition, but usually the copolymer contains unsaturated carboxylic acid in an amount of from about 0.5 to about 15 mol% and, preferably, from about 1 to about 8 mol%. The above-mentioned optional copolymerizable component may be copolymerized with the ethylene and the unsaturated carboxylic acid in an amount of up to about 15 mol% and, preferably up to about 10 mol%.

The ionomer (A) can also be obtained by saponifying the ethylene unsaturated carboxylic acid ester copolymer. Preferably, however, the ionomer (A) is obtained by at least partially neutralizing an ethylene unsaturated carboxylic acid copolymer obtained by the high-pressure radical copolymerization known in the art. Preferably, this ethylene unsaturated carboxylic acid copolymer has a melt index at 190°C under a load of 2160 grams of about 0.1 to about 1000 g/10 min. and, more preferably, about 0.5 to about 300 g/10 min.

In ionomer (A), the metal ions employed in the neutralization may be those of monovalent metals such as lithium, sodium or potassium, or those of multi-valent metal such as zinc, magnesium, calcium, copper, tin, nickel, cobalt or aluminum. Particularly preferred metal ions are those ions in which at least part of them are ions of a divalent metal. Preferred examples of the divalent metal include zinc and/or magnesium, zinc being the most preferred.

When the metal ions employed are only monovalent, the condensed cyclic compound having not less than two aminoalkyl groups exhibits a weak coordination force. In this case, the condensed cyclic compound can be blended only in a small amount since it may bleed out when it is blended in large amounts. Therefore, the properties are not so much improved.

Two or more kinds of ionomers may be used as the ionomer (A), or the ionomer may be used in combination with the ethylene/unsaturated carboxylic acid copolymer, in order to ionize the ethylene/unsaturated carboxylic acid copolymer by melt-mixing. For reasons described above, furthermore, it is desired that the ionomer of a monovalent metal be used in combination with the ionomer of a divalent metal. In this case, in order for the condensed cyclic compound (B) having not less than two aminoalkyl groups to exhibit its effects, it is desired that the amount of ions of such a monovalent metal be suppressed to not larger than two equivalents and, particularly, not larger than one equivalent of the ions of the divalent metal. Depending upon the object, however, the ions of the monovalent metal may be made present in amounts outside the above-mentioned range. It is desired that the ionomer (A) has a degree of neutralization of, for example, from 5 to 100% and, preferably, from 10 to 90%.

It is believed that the ionomer of these metals forms an amine complex salt or an ammonium salt together with the condensed cyclic compound to exhibit improved stiffness, hardness and rebound resilience. In the case of the ionomer of a multi-valent metal, it is believed that an amine complex salt is formed chiefly between the multi-valent metal and the amino group of the condensed cyclic compound. In the case of the ionomer of the monovalent metal, it is believed that an ammonium salt is formed between the free carboxyl group of the ionomer and amino group of the condensed cyclic compound. The present invention, however, is in no way restricted by such a theory.

Herein, the distinction between hard and soft is based on a subjective point of view. Particularly in the case of golf balls, ionomers referred to as "hard" are those having a Shore D hardness of not lower than 60 and those referred to as "soft" are those having a Shore D hardness of lower than 60. A hard ionomer is normally an ionomer of a copolymer of an ethylene and an unsaturated carboxylic acid, or, if the ionomer contains any other optional copolymerizable component described above, that optional component is contained in a small amount. A soft ionomer, on the other hand, is normally the above-mentioned ionomer which contains, as any optional copolymerizable component, an unsaturated carboxylic acid ester or a vinyl ester in a considerable amount, preferably not less than about 2 mol%. The amount of optional copolymerizable component may vary, however, depending upon the amount of the unsaturated carboxylic acid or the degree of neutralization.

When ionomer (A) is a hard ionomer, a harder ionomer composition is usually obtained by the modification. When ionomer (A) is a soft ionomer, properties also change as in the case of a hard ionomer. When a soft ionomer is used, however, there is obtained an ionomer composition having a high rebound resilience though the hardness and stiffness are not so high.

According to the present invention, another component of the ionomer composition is the condensed cyclic compound (B) having not less than two aminoalkyl groups. The amino group of the aminoalkyl group is a primary amino group such as aminomethyl group, aminoethyl group or aminopropyl group. Among them, however, the aminomethyl group is most easily available and is preferred. The condensed ring of the condensed cyclic compound may be either an alicyclic ring or an aromatic ring. The condensed cyclic compound may have any number of condensed rings. However, the condensed cyclic compound having two or three condensed rings is easily available.

Concrete examples of the condensed cyclic compound having not less than two aminoalkyl groups include 2, 5 (or 2, 6) -bis(aminomethyl) bicyclo [2,2,1] heptane, 2,6 (or 2, 7) -bis (aminomethyl) bicyclo [3,2,1] octane, 2,5 (or 2, 6) -bis (aminomethyl) -7 -dimethylbicyclo [2,2,1] heptane, 2, 6 -is (aminomethyl) adamantane, and 1,4 (or 2, 6 or 2,7) -bis (aminomethyl) naphthalene. The component (B) may be a mixture of two or more kinds.

The condensed cyclic compound (B) having not less than two aminoalkyl groups is blended at a ratio of from 0.01 to 1 equivalent and, preferably, from 0.05 to 1 equivalent with respect to the carboxyl groups (both free and ionized carboxyl groups) of the ionomer (A).

When the condensed cyclic compound (B) is used in an amount in excess of one equivalent with respect to the carboxyl groups, further improvement of the physical properties is limited because the condensed cyclic compound (B) bleeds out from the molded article to deteriorate the quality.

The ionomer composition of the present invention may be blended with a variety of additives such as thermoplastic resins, viscosity-imparting resins, waxes, antioxidants, weather resistance stabilizers, photo-stabilizers, heat stabilizers, ultraviolet absorbers, lubricants, pigments, dyes and inorganic fillers.

The ionomer composition of the present invention can be prepared by melt-mixing the ionomer (A) and the compound (B) as well as any additives by using an ordinary melt-mixing equipment at a temperature higher than the melting point of the ionomer (A) and, preferably, at a temperature of from about 180 to 240°C. When two or more kinds of ionomers (A) are used, these ionomers may be simultaneously mixed into the compound (B). Or, only one ionomer component may be melt-mixed with the compound (B), and the thus obtained composition and another ionomer component may then be melt-mixed together.

### EXAMPLES

The invention will now be described by way of Examples.

The ionomer resins and amine compounds used in Examples and in Comparative Examples are shown in Tables 1 and 2. Table 3 shows equivalents of the amine compounds with respect to the carboxyl groups in the acid copolymers in Examples and in Comparative Examples.

### Example 1

Using a twin screw extruder (screw diameter of 30 mm, L/D = 25), Amine Compound 1 was added dropwise by a pump through a feed port in an amount of 5% by weight (0.37 equivalents with respect to the carboxyl groups in the acid copolymer) to Ionomer Resin 1, and the mixture was melt-mixed at a temperature of 200°C and a screw rotation speed of 200 rpm.

The obtained resin composition was compression molded into a predetermined shape, and its properties were evaluated in compliance with the following methods. The results were as shown in Table 4.

| | |
|---|---|
| Melt Index | Measured in compliance with JIS K7210, at 190°C under a load of 2160 g. |
| Hardness (Shore D) | Measured in compliance with JIS K7215. |
| Olsen stiffness | Measured in compliance with JIS K7106. |
| Tensile characteristics (tensile strength at break and elongation ratio) | Measured in compliance with JIS K7113, test piece No. 2, tension speed of 200 mm/min. |
| Rebound resilience | Measured in compliance with JIS K6301. |
| Melting Point | Measured using DSC |
| Measurement of thermogravity | Measured in compliance with JIS K7120. Temperature is raised at a rate of 5°C/min. in air atmosphere. The temperature at which the TG curve starts bending was regarded to be a temperature at which the weight starts decreasing. |

### Examples 2 and 3

Following the procedure of Example 1, Amine Compound 1 was supplied in amounts as shown in Table 3.

### Examples 4 to 8

Following the procedure of Example 1, Ionomer Resins 2 to 5 were substituted for Ionomer Resin 1, and Amine Compound 1 was supplied in amounts as shown in Table 3.

### Comparative Examples 1 and 2

No Amine Compound 1 was used in these Comparative Examples. The obtained compositions in the Comparative Examples were inferior to the compositions obtained in the Examples 1-5 (Examples 1 to 3 were compared with Comparative Example 1, and Examples 4 and 5 were compared with Comparative Example 2) in regard to Melt Index, hardness, Olsen stiffness and rebound resilience.

### Comparative Example 3

Following the same procedure as in Examples 4 and 5, the Amine Compound 1 was used in an amount in excess of one equivalent with respect to the carboxyl groups of the ionomer resin 2. The Amine Compound 1 bled out on the surface of the article obtained by molding the resin composition with the application of heat and pressure.

### Comparative Example 4

Following the procedure of Example 1, Amine Compound 2 was used instead of the Amine Compound 1. When compared with the resin composition of Example 1, the obtained resin composition exhibited a nearly comparable rebound resilience, but also exhibited a high hardness and a low temperature at which the weight starts decreasing.

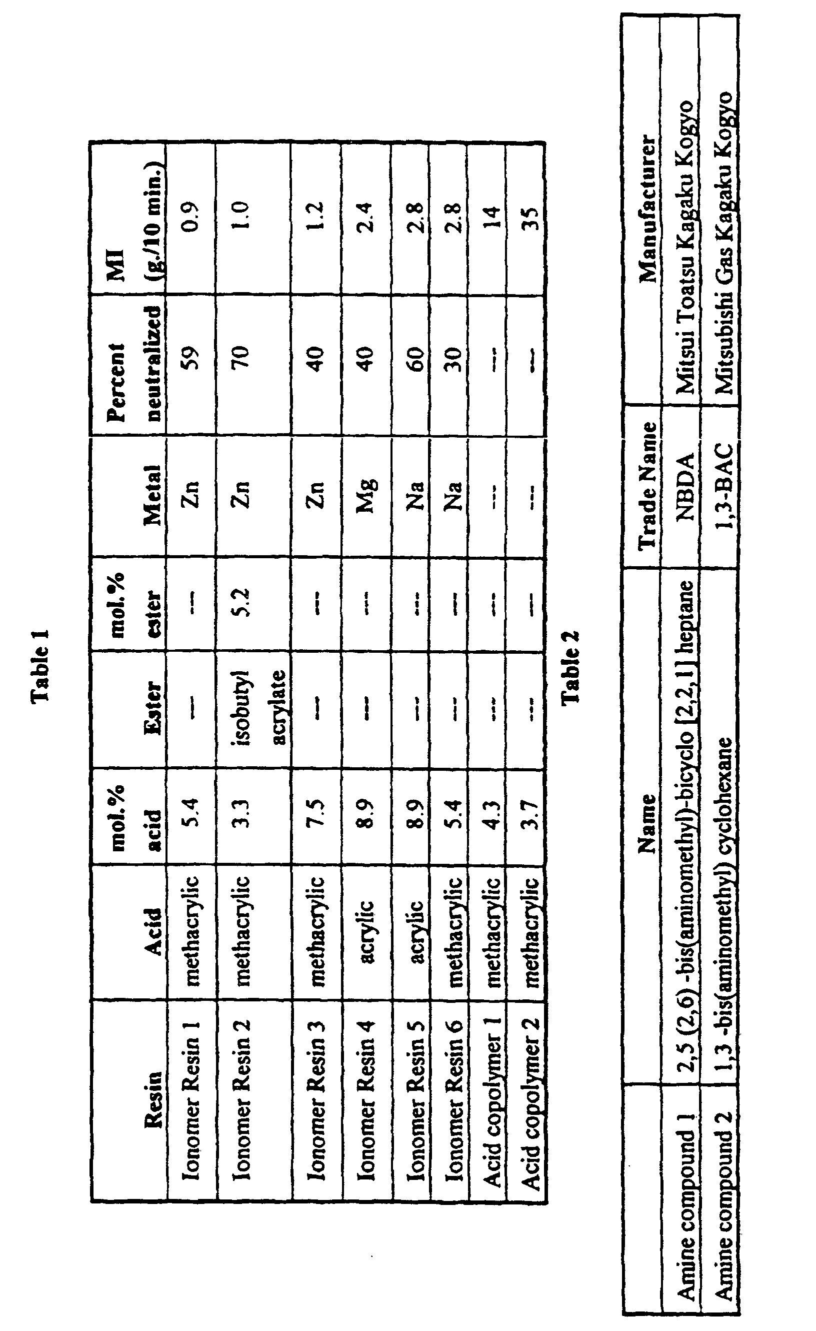

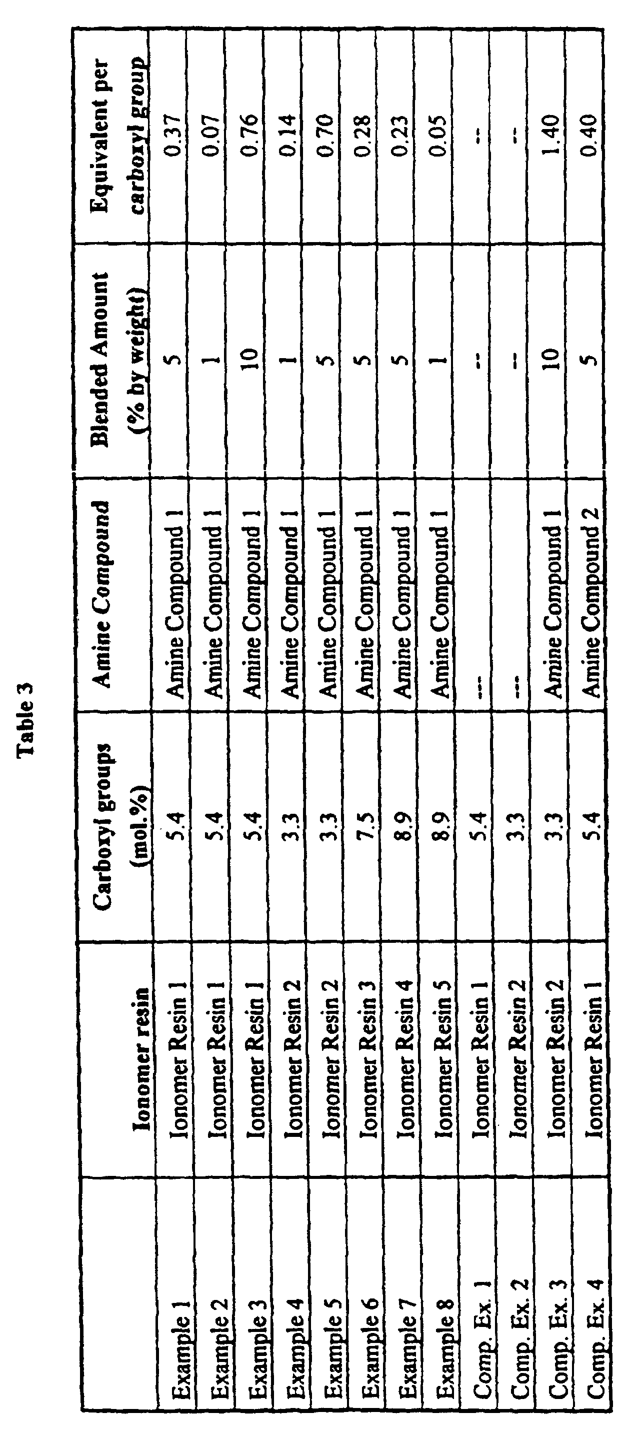

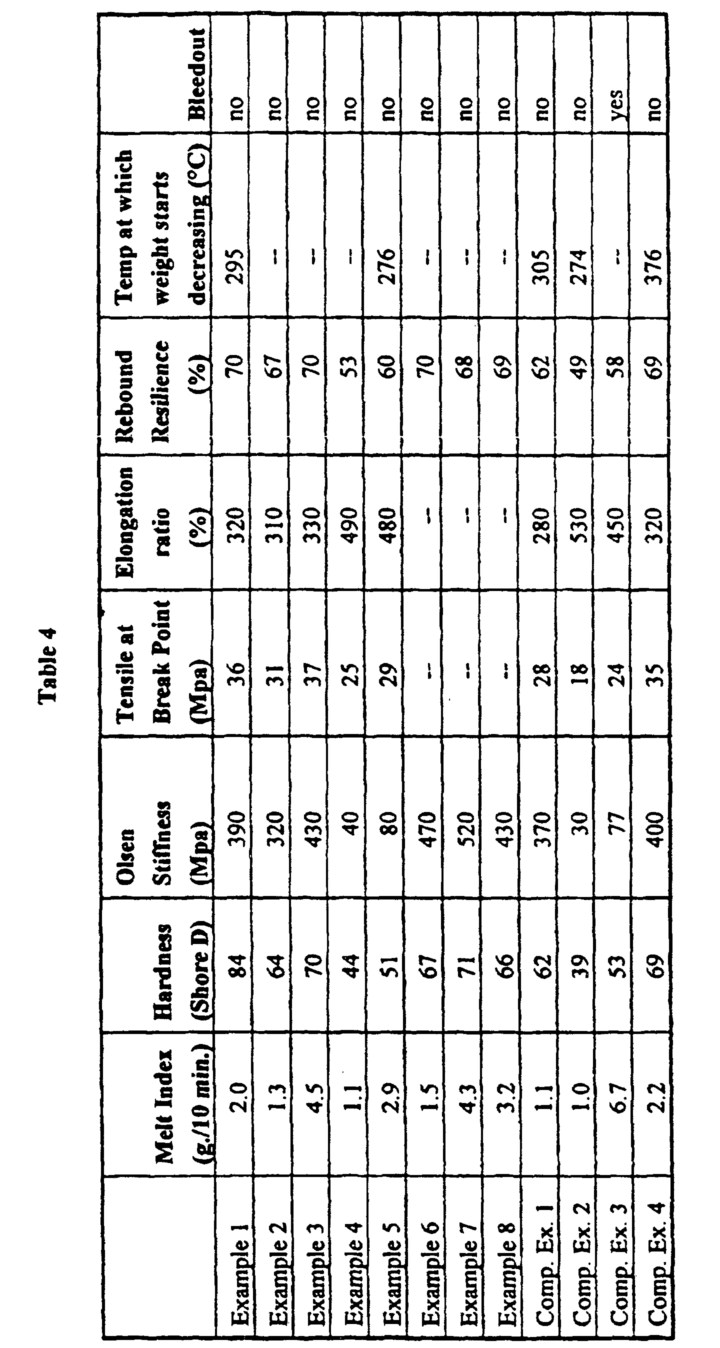

### Example 9

The resin composition obtained in Example 1 and the resin composition obtained in Example 5 were dry-blended at a blending ration as shown in Table 5, fed to a single screw extruder (screw diameter of 40 mm, L/D = 28) and were melt-mixed at a temperature of 200°C and a screw running speed of 40 rpm.

The resulting resin composition was compression molded into a predetermined shape and its properties were evaluated using the methods described above. The results are shown in Table 6.

### Examples 10 to 13

Following the procedure of Example 9, the resin composition obtained in Example 1 or the resin composition obtained in Example 6 was melt-blended with various ionomer resins at ratios shown in Table 5.

The resulting resin compositions were compression molded into a predetermined shape and properties were evaluated using the methods described above. The results are shown in Table 6.

### Example 14

Using a twin screw extruder (screw diameter of 44 mm, L/D = 33), Ionomer Resin 1, Acid Copolymer 1 and Acid Copolymer 2 were dry-blended at a ratio shown in Table 5 and were fed through a feed port and, then, Amine Compound 1 was added dropwise by a pump through a vent port located at a middle portion of a barrel in an amount of 5% by weight with respect to the resin component (0.41 equivalents with respect to the carboxyl groups in the acid copolymers). The mixture was melt-mixed at a temperature of 200°C and a screw rotation speed of 100 rpm.

The resulting resin composition was compression molded into a predetermined shape and properties were evaluated using the methods described above. The results are shown in Table 6.

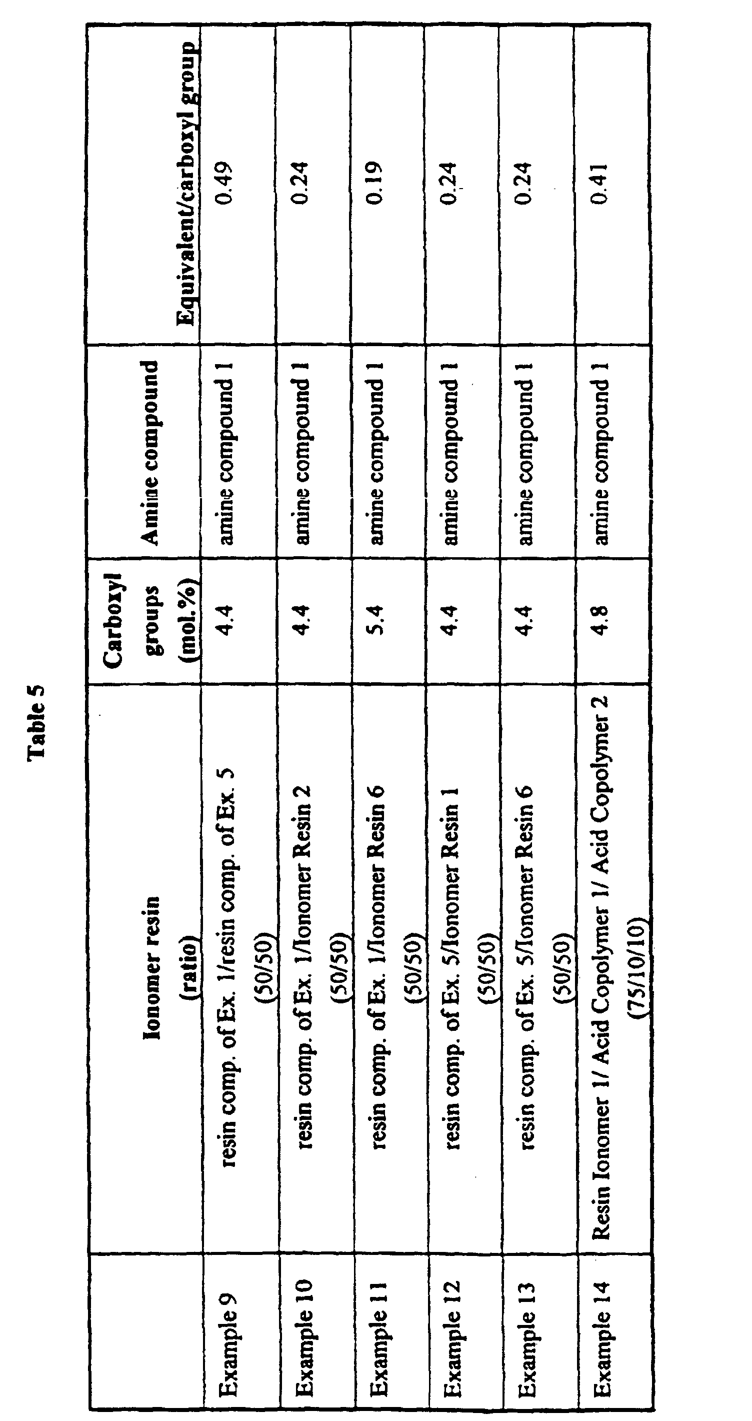

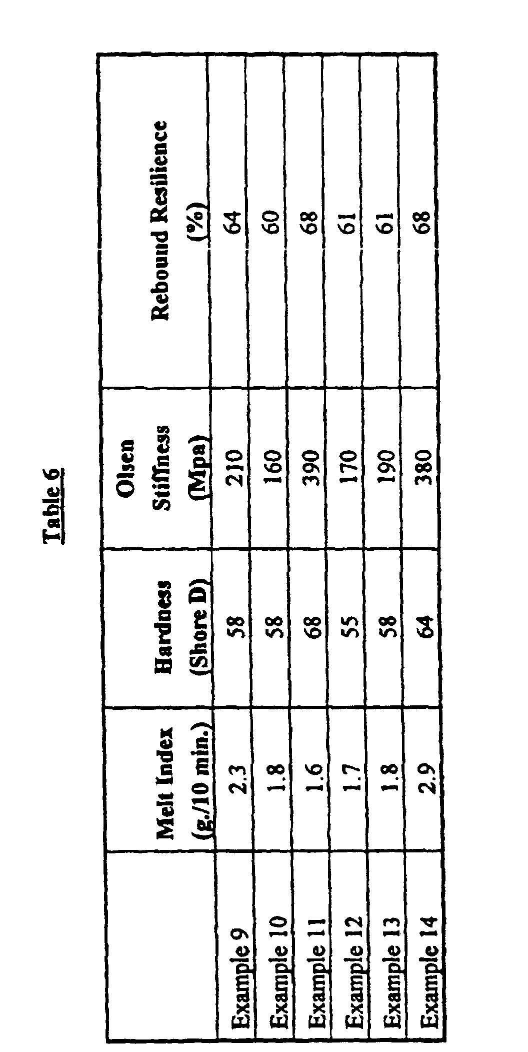

## Claims

1. An ionomer composition comprising (A) an ionomer of an ethylene/unsaturated carboxylic acid copolymer, and (B) an amino cyclic compound having two aminoalkyl groups and two or more condensed alicyclic or aromatic rings, wherein (B) is melt blended with (A) at a ratio of from 0.01 to 1 equivalent with respect to the carboxyl groups of the ionomer (A).

2. An ionomer composition according to Claim 1, wherein the ionomer (A) of the ethylene/unsaturated carboxylic acid copolymer contains a multi-valent metal as a metallic ion component.

3. An ionomer composition according to Claim 1 or 2, wherein the ionomer (A) of the ethylene/unsaturated carboxylic acid copolymer is a hard ionomer of a copolymer of an ethylene and an unsaturated carboxylic acid.

4. An ionomer composition according to Claim 1 or 2, wherein the ionomer (A) of the ethylene/unsaturated carboxylic acid copolymer is a soft ionomer of a copolymer of an ethylene and an unsaturated carboxylic acid and an unsaturated carboxylic acid ester.

5. An ionomer composition according to any preceding claim, wherein the ionomer (A) of the ethylene/unsaturated carboxylic acid copolymer comprises two or more kinds of ionomers.

6. An ionomer composition according to Claim 5, wherein two or more kinds of ionomers contain different kinds of metals.

7. An ionomer composition according to Claim 5 or 6, wherein two or more kinds of ionomers are a hard ionomer and a soft ionomer.

8. Use of an ionomer composition according to any preceding claim as a cover material for golf balls.

9. Use according to Claim 8, wherein said ionomer composition is used as an outer cover and/or an inner cover of a dual cover.

10. Use according to claim 8, wherein the ionomer (A) of the ethylene/unsaturated carboxylic acid copolymer comprises a hard ionomer of a copolymer of an ethylene and an unsaturated carboxylic acid and a soft ionomer of a copolymer of an ethylene and an unsaturated carboxylic acid and an unsaturated carboxylic acid ester.

11. A golf ball comprising a core material and a cover material, wherein the cover material comprises the material of according to any of claims 1 to 7.

12. A golf ball comprising a core material and a dual cover material, wherein one material of the dual cover material is the ionomer composition according to any one of Claims 1 to 7 and the other material is an ionomer of an ethylene/unsaturated carboxylic acid copolymer.

13. A golf ball according to Claim 12, wherein one of the covers comprising the dual cover is hard and the material of the other cover is soft.

14. A golf ball according to claim 11, wherein the ionomer (A) of the ethylene/unsaturated carboxylic acid copolymer comprises a hard ionomer of a copolymer of an ethylene and an unsaturated carboxylic acid and a soft ionomer of a copolymer of an ethylene and an unsaturated carboxylic acid and an unsaturated carboxylic acid ester.

## Patentansprüche

1. Ionomer-Zusammensetzung umfassend: (A) ein Ionomer eines Ethylen-/ungesättigten Carbonsäure-Copolymers und (B) eine cyclische Aminoverbindung mit zwei Aminoalkylgruppen und zwei oder mehr kondensierten alicyclischen oder aromatischen Ringen, worin (B) mit (A) in einem Verhältnis von 0,01 bis 1 Äquivalent bezogen auf die Carboxylgruppen des Ionomers (A) schmelzgemischt ist.

2. Ionomer-Zusammensetzung nach Anspruch 1, worin das Ionomer (A) des Ethylen-/ungesättigten Carbonsäure-Copolymers ein mehrwertiges Metall als eine Metallionenkomponente enthält.

3. Ionomer-Zusammensetzung nach Anspruch 1 oder 2, worin das Ionomer (A) des Ethylen-/ungesättigten Carbonsäure-Copolymers ein hartes Ionomer eines Copolymers aus einem Ethylen und einer ungesättigten Carbonsäure darstellt.

4. Ionomer-Zusammensetzung nach Anspruch 1 oder 2, worin das Ionomer (A) des Ethylen-/ungesättigten Carbonsäure-Copolymers ein weiches Ionomer eines Copolymers aus einem Ethylen und einer ungesättigten Carbonsäure und einem ungesättigten Carbonsäureester darstellt.

5. Ionomer-Zusammensetzung nach einem der vorangehenden Ansprüche, worin das Ionomer (A) des Ethylen-/ungesättigten Carbonsäure-Copolymers zwei oder mehr Ionomerarten umfasst.

6. Ionomer-Zusammensetzung nach Anspruch 5, worin zwei oder mehr Ionomerarten verschiedene Metallarten enthalten.

7. Ionomer-Zusammensetzung nach Anspruch 5 oder 6, worin zwei oder mehr Ionomerarten ein hartes Ionomer und ein weiches Ionomer darstellen.

8. Verwendung einer Ionomer-Zusammensetzung nach einem der vorangehenden Ansprüche als ein Hüllenmaterial für Golfbälle.

9. Verwendung nach Anspruch 8, worin die Ionomer-Zusammensetzung als eine Außenhülle und/oder eine Innenhülle einer Doppelhülle verwendet wird.

10. Verwendung nach Anspruch 8, worin das Ionomer (A) des Ethylen-/ungesättigten Carbonsäure-Copolymers ein hartes Ionomer eines Copolymers aus einem Ethylen und einer ungesättigten Carbonsäure und ein weiches Ionomer eines Copolymers aus einem Ethylen und einer ungesättigten Carbonsäure und einem ungesättigten Carbonsäureester umfasst.

11. Golfball umfassend ein Kernmaterial und ein Hüllenmaterial, worin das Hüllenmaterial das Material nach einem der Ansprüche 1 - 7 umfasst.

12. Golfball umfassend ein Kernmaterial und ein Doppelhüllenmaterial, worin ein Material des Doppelhüllenmaterials die Ionomer-Zusammensetzung nach einem der Ansprüche 1 bis 7 darstellt, und das andere Material ein Ionomer eines Ethylen-/ungesättigten Carbonsäure-Copolymers darstellt.

13. Golfball nach Anspruch 12, worin eine der Hüllen, umfassend die Doppelhülle, hart ist und das Material der anderen Hülle weich ist.

14. Golfball nach Anspruch 11, worin das Ionomer (A) des Ethylen-/ungesättigten Carbonsäure-Copolymers ein hartes Ionomer eines Copolymers aus einem Ethylen und einer ungesättigten Carbonsäure und einem ungesättigten Carbonsäureester umfasst.

## Revendications

1. Composition ionomère comprenant (A) un ionomère d'un copolymère d'éthylène/acide carboxylique insaturé, et (B) un composé amino cyclique ayant deux groupes aminoalkyle et deux ou plusieurs cycles alicycliques ou aromatiques condensés, dans laquelle (B) est mélangé à l'état fondu avec (A) à un rapport de 0,01 à 1 équivalent en ce qui concerne les groupes carboxyle de l'ionomère (A).

2. Composition ionomère selon la revendication 1, dans laquelle l'ionomère (A) du copolymère d'éthylène/acide carboxylique insaturé contient un métal polyvalent comme composant ionique métallique.

3. Composition ionomère selon la revendication 1 ou 2, dans laquelle l'ionomère (A) du copolymère d'éthylène/acide carboxylique insaturé est un ionomère dur d'un copolymère d'un éthylène et d'un acide carboxylique insaturé.

4. Composition ionomère selon la revendication 1 ou 2, dans laquelle l'ionomère (A) du copolymère d'éthylène/acide carboxylique insaturé est un ionomère souple d'un copolymère d'un éthylène et d'un acide carboxylique insaturé et d'un ester d'acide carboxylique insaturé.

5. Composition ionomère selon l'une quelconque des revendications précédentes, dans laquelle l'ionomère (A) du copolymère d'éthylène/acide carboxylique insaturé comprend deux ou plusieurs types d'ionomères.

6. Composition ionomère selon la revendication 5, dans laquelle deux ou plusieurs types d'ionomères contiennent différents types de métaux.

7. Composition ionomère selon la revendication 5 ou 6, dans laquelle deux ou plusieurs types d'ionomère sont un ionomère dur et un ionomère souple.

8. Emploi d'une composition ionomère selon l'une quelconque des revendications précédentes comme matériau d'enveloppe pour des balles de golf.

9. Emploi selon la revendication 8, dans lequel ladite composition ionomère est employée comme enveloppe externe et/ou enveloppe interne d'une enveloppe double.

10. Emploi selon la revendication 8, dans lequel l'ionomère (A) du copolymère d'éthylène/acide carboxylique insaturé comprend un ionomère dur d'un copolymère d'un éthylène et d'un acide carboxylique insaturé et un ionomère souple d'un copolymère d'un éthylène et d'un acide carboxylique insaturé et d'un ester d'acide carboxylique insaturé.

11. Balle de golf comprenant un matériau de noyau et un matériau d'enveloppe, dans laquelle le matériau d'enveloppe comprend le matériau selon l'une quelconque des revendications 1 à 7.

12. Balle de golf comprenant un matériau de noyau et un matériau d'enveloppe double, dans laquelle un matériau du matériau d'enveloppe double est la composition ionomère selon l'une quelconque des revendications 1 à 7 et l'autre matériau est un ionomère d'un copolymère d'éthylène/acide carboxylique insaturé.

13. Balle de golf selon la revendication 12, dans laquelle l'une des enveloppes comprenant l'enveloppe double est dure et le matériau de l'autre enveloppe est souple.

14. Balle de golf selon la revendication 11, dans laquelle l'ionomère (A) du copolymère d'éthylène/acide carboxylique insaturé comprend un ionomère dur d'un copolymère d'un éthylène et d'un acide carboxylique insaturé et un ionomère souple d'un copolymère d'un éthylène et d'un acide carboxylique insaturé et d'un ester d'acide carboxylique insaturé.
